# EUROPÄISCHE PATENTSCHRIFT

(11) **EP 3 839 416 B1**
(45) Veröffentlichungstag und Bekanntmachung des Hinweises auf die Patenterteilung: **06.11.2024**
(21) Anmeldenummer: 19217913.3
(22) Anmeldetag: 19.12.2019
(51) Int. Cl.: G01B 7/31, G01B 11/27, G01B 21/04

(54) **ANORDNUNG ZUM REDUZIEREN VON FEHLERN EINER DREHVORRICHTUNG BEI DER BESTIMMUNG VON KOORDINATENMESSWERTEN EINES WERKSTÜCKES**
ARRANGEMENT FOR REDUCING ERRORS IN A ROTATING DEVICE DURING THE DETERMINATION OF COORDINATE MEASUREMENTS OF A WORKPIECE
DISPOSITIF DE RÉDUCTION D'ERREURS D'UN DISPOSITIF TOURNANT LORS DE LA DÉTERMINATION DES VALEURS MESURÉES DES COORDONNÉES D'UNE PIÈCE

(43) Veröffentlichungstag der Anmeldung: 23.06.2021
(73) Patentinhaber: Hexagon Metrology GmbH, 35578 Wetzlar (DE)
(72) Erfinder: Reitz, Sören, 35578 Wetzlar (DE)
(74) Vertreter: Knefel, Cordula

(56) Entgegenhaltungen:
- WO-A1-2013/007286
- DE-A1- 102015 201 583

## Beschreibung

Die Erfindung betrifft eine Anordnung zum Reduzieren von Fehlern einer Drehvorrichtung bei der Bestimmung von Koordinatenmessgeräten eines Werkstückes.

Zum Stand der Technik (DE 10 2009 044 640 A1) gehört ein Koordinatenmessgerät, welches einen Drehtisch aufweist. Derartige Koordinatenmessgeräte werden zum taktilen oder optischen Scannen von Werkstückoberflächen, beispielsweise von Zahnrädern eingesetzt. Die Drehtische drehen während des Scanvorganges das auf dem Drehtisch angeordnete Werkstück. Durch den Einsatz eines Drehtisches werden zum einen aufwendige Aufbauten von Messkopfkomponenten, welche hohe Kosten verursachen, oder zum anderen häufige Wechsel der Messkopfkomponenten, welche den Messdurchsatz reduzieren, zum Vermessen zum Beispiel sämtlicher Zähne eines Zahnrades vermieden.

Durch die Drehung des Drehtisches sind in den Messwerten beispielsweise die Auswirkungen des Getriebewinkelfehlers beim Scannen sichtbar. Die Messwerte weisen eine deutlich höhere Welligkeit auf, die nicht durch die Materialoberfläche, sondern durch das Drehtischverhalten verursacht wird.

Ist dieser Winkelfehler in Amplitude und Phasenlage (bezogen auf den Eingangswinkel und Abtriebswinkel) bekannt, kann er in Verbindung mit den üblichen geometrischen Korrekturalgorithmen eines Koordinatenmessgerätes in der Ausführung einer Messlinie berücksichtigt werden.

Zum Stand der Technik (DE 36 37 410 C2) gehört ein Verfahren zur Messung von Drehtischabweichungen. Bei diesem Verfahren erfolgt die Korrektur von statischen Drehwinkelabweichungen. Gemäß diesem Stand der Technik wird ein Prüfkörper in verschiedenen Winkelstellungen gemessen, wodurch in einem Messdurchgang Datensätze erhalten werden, aus denen sich Winkelpositionsabweichungen wie auch Laufabweichungen der Drehachse des Drehtisches ermitteln lassen. Dynamische, das heißt geschwindigkeitsabhängige Fehler lassen sich mit diesem Verfahren bei Drehtischen mit Gleitkeilgetrieben oder Riemengetrieben nicht beseitigen. Darüber hinaus ist dieses Verfahren sehr aufwändig, da vor Inbetriebnahme und auch während des Messbetriebes immer wieder Prüfkörper in den verschiedenen Winkelstellungen gemessen werden müssen. Mit diesen Korrekturwerten werden die Messwerte korrigiert.

Weiterhin gehört zum Stand der Technik (DE 10 2012 012 197 A1) ein Koordinatenmessgerät mit Linearachsen, wobei ein in einer ersten Achsrichtung verschiebbarer Schlitten vorgesehen ist, der mit einer zweiten linearen Achse verbunden ist, die einen in einer zweiten zur ersten Achsrichtung im wesentlichen senkrechten Achsrichtung verschiebbaren zweiten Schlitten umfasst. Darüber hinaus ist zur Erzeugung eines zur ersten Achsrichtung parallelen Lichtstrahls eine Lichtquelle vorgesehen und zumindest ein zur ersten Achse zugeordneter positionsempfindlicher Sensor zur Erfassung einer Position eines Auftreffbereichs des zur ersten Achsrichtung parallelen Lichtstrahls. Gemäß diesem Stand der Technik werden lediglich die Linearachsen eines Koordinatenmessgerätes überprüft und die Verformung des Koordinatenmessgerätes gemessen.

Weiterhin gehört zum Stand der Technik (DE 10 2010 052 503 B4) ein Verfahren zur Steuerung eines Koordinatenmessgerätes mit einer Mehrzahl zur Positionierung eines Tastkopfes motorisch antreibbarer Achsen, wobei das Koordinatenmessgerät in mindestens einer Achse bewegt wird und wobei eine Verformung des Koordinatenmessgerätes gemessen wird. Gemäß diesem Stand der Technik wird lediglich die Verformung der Maschinenachsen eines Koordinatenmessgerätes kontinuierlich ermittelt, wobei eine Trennung von nieder- und höherfrequenten Anteilen vorgesehen ist.

Zum Stand der Technik (DE 101 27 528 A1) gehört darüber hinaus eine Vorrichtung zur Erfassung der Rotationsbewegung eines um eine Achse drehbaren Elementes, insbesondere eines Rundtisches mit einer koaxial zu dem Element angeordneten Maßverkörperung und zwei an der Maßverkörperung vorgesehenen Messteilungen, die die Drehachse der Maßverkörperung ringförmig umgeben und die zur Abtastung entlang zweier voneinander linear unabhängiger Richtungen eingerichtet sind. Gemäß diesem Stand der Technik wird die Rotationsbewegung des Rundtisches online gemessen, wozu mehrere Messköpfe erforderlich sind, was einen hohen Aufwand bei der Montage und der Justierung sowie hohe Kosten verursacht.

Weiterhin gehört zum Stand der Technik (DE 10 2005 023 467 A1) eine Vorrichtung zur Drehung eines Körpers sowie ein Verfahren zur Überwachung einer lastbedingten Taumelbewegung eines mit einem Körper belasteten Drehtisches. Gemäß diesem Stand der Technik werden zur Überwachung einer lastbedingten Taumelbewegung eines mit einem Körper belasteten Drehtisches unter Drehung des Drehtisches über einen vorgegebenen Winkelbereich aktuelle Taumelbewegungsdaten ermittelt, aus denen Werte eines Taumelfehlers ermittelt werden können. Aus den ermittelten Taumelbewegungsdaten werden unter Verwendung von Taumelfehlervergleichsdaten die Werte eines für den unbelasteten Drehtisch ermittelten Taumelfehlers wiedergegeben und einen lastbedingten Taumelfehler beschreibende Daten ermittelt. Dieses zum Stand der Technik gehörende Verfahren zeigt keine Erfassung einer fehlerhaften Verschiebung der Achse sowie des Positionsfehlers des Drehtisches, der sich durch Last ergibt. Dieses Verfahren ist sehr zeitaufwendig, weil bei Laständerung, die über einen Beschleunigungssensor festgestellt wird, immer wieder der Drehtisch um 360° gedreht werden muss, um über vorgesehene Winkelgeber den Taumelfehler als Komplettkorrektur zu ermitteln. Beides wird aus einer vorher aufgenommenen Korrektur abgeleitet.

Weiterhin gehört zum Stand der Technik (DE 10 2013 204 581 A1) ein Verfahren zur Korrektur einer Winkelabweichung beim Betrieb eines Koordinatenmessgerätes. Gemäß diesem Stand der Technik erfolgt die Bestimmung der Korrekturwerte für verschiedene Beladungen und Temperaturen. Die Winkeländerungen für die unterschiedlichen Zustände werden vorab ermittelt und nicht online direkt bestimmt. Positionsverschiebungen werden ebenfalls nicht ermittelt.

Darüber hinaus gehört zum Stand der Technik (DE 10 2015 201 583 A1) ein Verfahren zur Ermittlung eines auf einer Drehvorrichtung einwirkenden Moments oder einer auf einer Drehvorrichtung einwirkenden Kraft. Gemäß diesem Stand der Technik wird ein Moment und/oder eine Kraft erzeugt. Anschließend erfolgt eine Ermittlung einer Auslenkung des Rotors und/oder eines Positionsfehlers des Rotors und hieraus wird das Moment und/oder die Kraft ermittelt. Dieses Verfahren dient dazu, eine Warnung ausgeben zu können und/oder eine Drehbewegung des Rotors zu verhindern, wenn ein vorgegebener Grenzwert des Moments und/oder der Kraft erreicht oder überschritten wird. Gemäß diesem Stand der Technik erfolgt keine Reduzierung von Fehlern einer Drehvorrichtung während einer Messung.

Das der Erfindung zugrundeliegende technische Problem besteht darin, eine Vorrichtung zum Reduzieren von Fehlern einer Drehvorrichtung bei der Bestimmung von Koordinatenmesswerten eines Werkstückes anzugeben, mit der Drehtischfehler, beispielsweise translatorische Abweichungen oder Taumel ohne vorherige Messung mit einem Prüfkörper erfasst und die Koordinatenmesswerte korrigiert werden können.

Dieses technische Problem wird durch eine Anordnung mit den Merkmalen gemäß Anspruch 1 gelöst.

Die erfindungsgemäße Anordnung zum Reduzieren von Fehlern einer Drehvorrichtung bei der Bestimmung von Koordinatenmesswerten eines Werkstückes, wobei die Anordnung ein Koordinatenmessgerät und die Drehvorrichtung aufweist, auf der ein Werkstück anordbar und um eine Drehachse der Drehvorrichtung drehbar ist, wobei die Drehvorrichtung mit einer Drehtischplatte ein erstes, zum Koordinatenmessgerät während einer Messung stationäres erstes Teil und ein relativ zu dem ersten Teil drehbares zweites Teil aufweist, zeichnet sich dadurch aus, dass wenigstens drei Abstandssensoren für die Erfassung eines Abstandes des drehbaren zweiten Teiles zu den wenigstens drei Abstandssensoren an dem stationären ersten Teil angeordnet sind, und dass die Abstandssensoren als bezogen auf eine Drehachse der Drehvorrichtung in radialer Richtung den Abstand erfassende und/oder als bezogen auf die Drehachse der Drehvorrichtung in axialer Richtung den Abstand erfassende Abstandssensoren ausgebildet sind und dass die Abstandssensoren als einen Abstand zwischen den Abstandssensoren und der Drehtischplatte bestimmende Abstandssensoren einer Drehtischplatte ausgebildet sind.

Durch die erfindungsgemäße Ausgestaltung der Anordnung besteht die Möglichkeit, translatorische Abstände der Drehvorrichtung, insbesondere einer Drehtischplatte der Drehtischvorrichtung zu einer festgelegten Bezugsebene zu erfassen. Beispielsweise wenn der Drehtisch eine translatorische Verschiebung aufweist oder taumelt oder sich beispielsweise aufgrund eines sehr schweren Werkstückes durchbiegt, können diese Fehler des Drehtisches online mittels der wenigstens drei Abstandssensoren erfasst werden und die Koordinatenmesswerte können korrigiert werden.

Die erfindungsgemäße Anordnung hat den Vorteil, dass der Taumel und/oder translatorische Bewegungen der Drehtischplatte, das heißt des drehbaren zweiten Teiles der Drehvorrichtung während der Messung erfasst und gegebenenfalls korrigiert werden können.

Es ist nicht erforderlich, vor der Messung eine Messung mit einem Prüfkörper durchzuführen und Korrekturwerte zu ermitteln, die dann entweder online oder nach Erfassung der Messwerte zur Korrektur der Koordinatenmesswerte verwendet werden.

Die translatorischen Bewegungen und/oder der Taumel werden online erfasst und die Koordinatenmesswerte werden unmittelbar korrigiert.

Auch Fehler, die mit einem Prüfkörper nicht erfasst werden, können korrigiert werden. Bei diesen Fehlern handelt es sich beispielsweise um Fehler, die auftreten, wenn sehr schwere Werkstücke auf dem Drehtisch angeordnet werden und die Drehtischplatte sich durchbiegt. Diese Messwerte lassen sich mit einer Prüfkörpermessung nicht erfassen.

Darüber hinaus weist die erfindungsgemäße Anordnung den Vorteil auf, dass eine Zeitersparnis vorliegt, da Prüfkörpermessungen entfallen können.

Grundsätzlich sind drei Abstandssensoren ausreichend. Hierbei sind vorteilhaft sämtliche drei Abstandssensoren als Abstandssensoren ausgebildet, die bezogen auf die Drehachse der Drehvorrichtung entweder in radialer Richtung oder in axialer Richtung den Abstand erfassen.

Gemäß einer besonders bevorzugten Ausführungsform der Erfindung ist vorgesehen, dass vier Abstandssensoren für die Erfassung des Abstandes in radialer Richtung bezogen auf die Drehachse der Drehvorrichtung vorgesehen sind. Gemäß einer weiteren vorteilhaften Ausführungsform können vier Abstandssensoren für die Erfassung des Abstandes in axialer Richtung bezogen auf die Drehachse der Drehvorrichtung vorgesehen sein.

Eine weitere vorteilhafte Ausführungsform sieht vor, dass vier Abstandssensoren für die Erfassung des Abstandes in radialer Richtung bezogen auf die Drehachse der Drehvorrichtung und vier Abstandssensoren für die Erfassung des Abstandes in axialer Richtung bezogen auf die Drehachse der Drehvorrichtung vorgesehen sind.

Die Ausführungsform mit den vier Abstandssensoren für die Erfassung des Abstandes in radialer Richtung bezogen auf die Drehachse der Drehvorrichtung weist den Vorteil auf, dass Verschiebungen, die nur aufgrund von möglichen Ungenauigkeiten der Drehtischplatte entstehen, nicht erfasst werden, sondern dass mit den Sensoren ermittelt werden kann, ob tatsächlich eine translatorische Bewegung der Drehtischplatte vorliegt.

Auch bei der Anordnung von vier Abstandssensoren für die Erfassung des Abstandes in axialer Richtung bezogen auf die Drehachse der Drehvorrichtung wird vermieden, dass Ungenauigkeiten der Drehtischplatte erfasst werden. Beispielsweise kann ein Taumel erfasst werden, da bei einem Taumel, das heißt, wenn die Drehtischplatte sich zu der Drehachse der Drehvorrichtung neigt, die Drehtischplatte auf der einen Seite einen geringeren Abstand zu einem Abstandssensor aufweist und auf der gegenüberliegenden Seite bezogen auf den Durchmesser der Drehtischplatte einen entsprechend größeren Abstand zu dem Abstandssensor aufweist.

Eine besonders bevorzugte Ausführungsform der Erfindung sieht vor, dass vier Abstandssensoren für die Erfassung des Abstandes in radialer Richtung bezogen auf die Drehachse der Drehvorrichtung und vier Abstandssensoren für die Erfassung des Abstandes in axialer Richtung bezogen auf die Drehachse der Drehvorrichtung vorgesehen sind. Hierdurch werden Taumel und translatorische Bewegungen zuverlässig erfasst und können für eine Messwertkorrektur verwendet werden.

Gemäß einer weiteren vorteilhaften Ausführungsform der Erfindung ist vorgesehen, dass die Abstandssensoren über den Umfang der Drehvorrichtung gleichmäßig verteilt angeordnet sind.

Sind drei Abstandssensoren vorgesehen, beispielsweise für die Erfassung des Abstandes in radialer Richtung oder in axialer Richtung bezogen auf die Drehachse der Drehvorrichtung, sind die Sensoren vorteilhaft im 120°-Winkel zueinander angeordnet.

Bei vier Sensoren sind diese vorteilhaft im 90°-Winkel zueinander angeordnet.

Eine weitere vorteilhafte Ausführungsform der Erfindung sieht vor, dass jeweils ein Abstandssensor für die Erfassung des Abstandes in radialer Richtung der Drehachse der Drehvorrichtung und ein Abstandssensor für die Erfassung des Abstandes in axialer Richtung bezogen auf die Drehachse der Drehvorrichtung über den Umfang der Drehvorrichtung gesehen an den gleichen Winkelpositionen an dem ersten stationären Teil der Drehvorrichtung angeordnet sind.

Das bedeutet, dass die Abstandssensoren für die Erfassung des Abstandes in axialer Richtung und in radialer Richtung bezogen auf die Drehachse der Drehvorrichtung jeweils beispielsweise bei 0°, 90°, 180° und 270° angeordnet sind.

Diese paarweise Anordnung der Abstandssensoren für die Erfassung des Abstandes in axialer und in radialer Richtung bezogen auf die Drehachse der Drehvorrichtung hat den Vorteil, dass ein Verkabelungsaufwand für die Abstandssensoren gering gehalten werden kann.

Darüber hinaus kann durch die Auswertung der Messwerte der Abstandssensoren für die Erfassung des Abstandes in axialer Richtung und in radialer Richtung bezogen auf die Drehachse der Drehvorrichtung besser auf die translatorischen Bewegungen oder den Taumel der Drehvorrichtung geschlossen werden, wenn die Abstandssensoren jeweils paarweise angeordnet sind.

Eine weitere vorteilhafte Ausführungsform der Erfindung sieht vor, dass jeweils zwei Abstandssensoren für die Erfassung des Abstandes in radialer Richtung bezogen auf die Drehachse der Drehvorrichtung über den Umfang der Drehvorrichtung um 180° versetzt zueinander angeordnet sind. Durch diese gegenüberliegend angeordneten Abstandssensoren wird sichergestellt, dass Verschiebungen nicht nur aufgrund von Ungenauigkeiten der Drehtischplatte entstehen.

Werden geänderte Abstände von zwei gegenüberliegenden Sensoren erfasst, handelt es sich um eine translatorische Bewegung. Gegenüberliegend bedeutet, dass die Sensoren bezogen auf die Drehtischplatte um 180° versetzt angeordnet sind. Erfasst lediglich ein Abstandssensor einen geänderten Abstandswert, handelt es sich höchstwahrscheinlich um eine Ungenauigkeit der Drehtischplatte.

Als Abstandssensoren werden vorteilhaft induktive Sensoren, kapazitive Sensoren, piezoelektrische Sensoren, Wirbelstromsensoren, Magnetfeldsensoren, optische Sensoren und/oder mechanische Induktivtaster verwendet. Auch andere Sensoren, mit denen eine Abstandsmessung durchgeführt werden kann, können verwendet werden.

Induktive Sensoren weisen den Vorteil auf, dass sie sehr preiswert sind.

Andere Sensoren können jedoch auch verwendet werden je nach Anwendungsbereich und auch in Abhängigkeit von der Messgenauigkeit des Koordinatenmessgerätes.

Eine weitere vorteilhafte Ausführungsform der Erfindung sieht vor, dass das erste stationäre Teil der Drehvorrichtung Teil des Koordinatenmessgerätes ist. In diesem Fall ist die Drehvorrichtung mit dem Drehtisch in dem Koordinatenmessgerät, beispielsweise in dem Messtisch des Koordinatenmessgerätes integriert. In diesem Fall sind die Abstandssensoren an dem Messtisch des Koordinatenmessgerätes angeordnet.

Gemäß einer anderen Ausführungsform der Erfindung ist vorgesehen, dass das Koordinatenmessgerät als Koordinatenmessgerät mit einem Werkzeugtisch ausgebildet ist und dass auf dem Werkzeugtisch die Drehvorrichtung angeordnet ist. In diesem Fall besteht die Drehvorrichtung aus dem stationären Teil und dem relativ zu dem stationären Teil drehbaren Teil. An dem stationären Teil sind die Abstandssensoren angeordnet. Bei dieser Ausführungsform besteht die Möglichkeit, die Drehvorrichtung auf einem Messtisch des Koordinatenmessgerätes anzuordnen, wenn dies für Vermessungen eines Werkstückes erforderlich ist.

Bei dieser Ausführungsform besteht die Möglichkeit, dass das Koordinatenmessgerät als ein Koordinatenmessgerät in Portalbauweise ausgebildet ist. Es besteht jedoch auch die Möglichkeit, das Koordinatenmessgerät in anderer Bauweise auszubilden.

Weitere Merkmale und Vorteile der Erfindung ergeben sich anhand der zugehörigen Zeichnungen, in der mehrere Ausführungsbeispiele einer erfindungsgemäßen Drehvorrichtung nur beispielhaft dargestellt sind. In der Zeichnung zeigen:
- Fig. 1: ein Koordinatenmessgerät in perspektivischer Ansicht;
- Fig. 2: einen Drehtisch im Längsschnitt mit dargestelltem Taumel;
- Fig. 3: Darstellung des Taumels der Drehachse D beziehungsweise D';
- Fig. 4: einen Drehtisch im Längsschnitt mit Verbiegung der Drehtischplatte im Längsschnitt;
- Fig. 5: eine Drehtischplatte in Draufsicht.

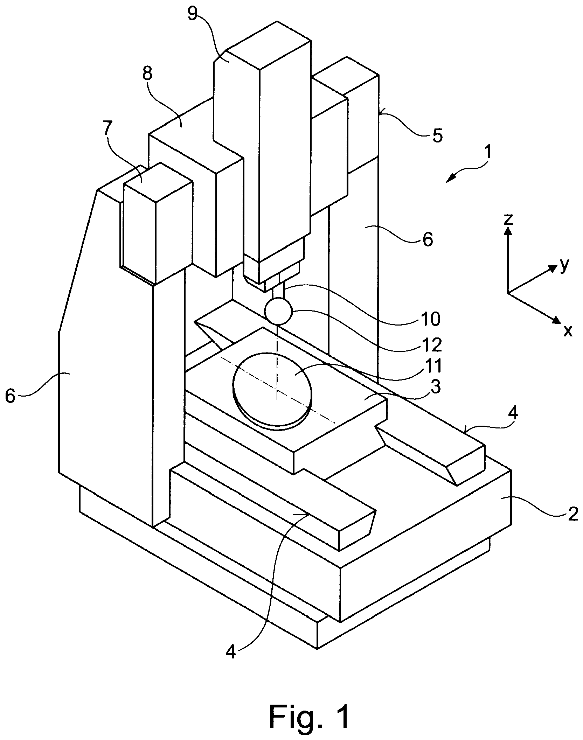

Fig. 1 zeigt ein Koordinatenmessgerät 1 in Portalbauweise mit einem Grundbett 2, auf dem ein Messtisch 3 in X-Richtung verschiebbar angeordnet ist. Hierzu sind Führungen 4 auf dem Grundbett angeordnet. Ein Portal 5, welches Stützen 6 aufweist und welches nicht verschiebbar ausgebildet ist, trägt an einer Traverse 7 einen in Y-Richtung verschiebbaren Schlitten 8, an dem wiederum in Z-Richtung verschiebbar eine Pinole 9 angeordnet ist. Die Pinole 9 trägt einen Tastkopf 10, an dem eine Tastkugel 12 angeordnet ist. Der Taster 10 ist gegen andere Tasterkombinationen (nicht dargestellt) austauschbar.

In dem Messtisch 3 ist ein Drehtisch 11 angeordnet, auf dem ein Werkstück (nicht dargestellt) anordbar ist. Bei einem scannenden Verfahren wird der Drehtisch 11 gedreht und gleichzeitig der Taster 12 derart verfahren und ausgerichtet, dass die Kontur einer Werkstückoberfläche scannend ermittelt werden kann. Hierbei geht ein Taumel oder translatorische Verschiebungen des Drehtisches 11 in die Koordinatenmesswerte ein.

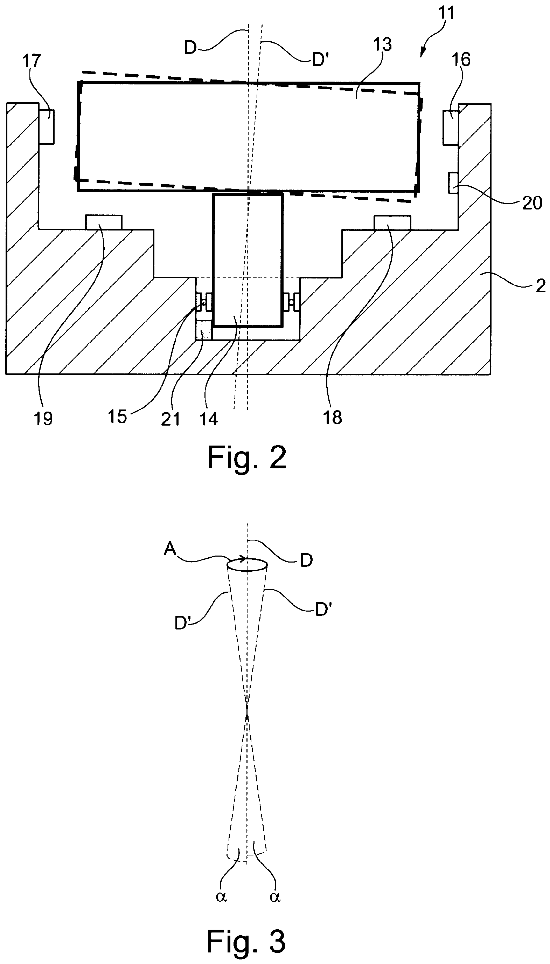

Gemäß Fig. 2 ist die Drehvorrichtung, das heißt der Drehtisch 11 dargestellt. Der Drehtisch 11 besteht aus einer Drehtischplatte 13 und einem Drehtischfuß 14. Der Drehtischfuß 14 ist in Kugellagern 15 gelagert derart, dass die Drehtischplatte 13 und der Drehtischfuß 14 um die Drehachse D drehbar ist. Die Kugellager 15 und der Drehtischfuß 14 sind lediglich schematisch dargestellt. In der Praxis ist der Drehtischfuß deutlich kürzer und breiter ausgebildet, um einer Taumelbewegung der Drehtischplatte 13 weitgehend entgegenzuwirken.

Die Lager 15 sind in dem Grundbett 2 angeordnet. Gleichermaßen sind Abstandssensoren 16, 17, 18, 19 fest an dem stationären Teil, das heißt an dem Grundbett 2 angeordnet.

Die Sensoren 16, 17 sind als in radialer Richtung den Abstand erfassende Abstandssensoren 16, 17 bezogen auf die Drehachse D der Drehvorrichtung 11 ausgebildet. Die Abstandssensoren 18, 19 sind als in axialer Richtung bezogen auf die Drehachse D der Drehvorrichtung 11 in axialer Richtung den Abstand erfassende Abstandssensoren 18, 19 ausgebildet. In Fig. 2 ist der Drehtisch 13 mit dem Drehtischfuß 14 mit der durchgezogenen Linie in der Idealposition ausgerichtet, das heißt, die Drehachse D ist senkrecht.

In der gestrichelten Position taumelt der Drehtisch 11, das heißt, die Drehachse D' wandert in einem Winkel um die Drehachse D. Dieses Taumeln ist in Fig. 3 dargestellt. Wie in der Fig. 3 dargestellt, ist die Drehachse D senkrecht ausgerichtet. Die Drehachse D', die das Taumeln der Drehachse D' anzeigt, wandert um die Drehachse D herum, wie im oberen Teil des Bildes mit dem Pfeil A dargestellt. Die Winkelabweichung zwischen D und D' beträgt α.

Wie in Fig. 2 dargestellt, bewirkt der Taumel der Drehtischplatte 13, dass der Abstand zwischen der Drehtischplatte 13 und dem Abstandssensor 17 in radialer Richtung bezogen auf die Drehachse D sich vergrößert, während sich der Abstand der Drehtischplatte 13 zu dem Abstandssensor 16 in radialer Richtung bezogen auf die Drehachse D sich verkleinert.

Durch die Abstandssensoren 16, 17 lässt sich damit bestimmen, dass entweder eine translatorische Bewegung oder eine Taumelbewegung stattfindet. Eine lokale Ungenauigkeit der Drehtischplatte 13 lässt sich ausschließen, da sich die Abstände zwischen der Drehtischplatte 13 und den Abstandssensoren 16, 17 jeweils verändern.

Gleichzeitig verändert sich der Abstand zwischen der Drehtischplatte 13 und den Abstandssensoren 18, 19. Der Abstand zwischen der Drehtischplatte 13 und dem Abstandssensor 19 wird größer, während der Abstand zwischen der Drehtischplatte 13 und dem Abstandssensor 18 kleiner wird. Die Abstandssensoren 18, 19 erfassen den Abstand in axialer Richtung bezogen auf die Drehtischachse D.

Aufgrund der Werte der vier Abstandssensoren 16, 17, 18, 19 lässt sich der Taumel bestimmen. Diese Messwerte werden online zur Korrektur der Koordinatenmesswerte eines auf dem Drehtisch 11 angeordneten Werkstückes (nicht dargestellt) verwendet.

In Fig. 2 ist schematisch eine Positionsmesseinrichtung, das heißt eine Drehwinkelmesseinrichtung 20 dargestellt, die den Drehwinkel des Drehtisches 11 bestimmt.

Darüber hinaus ist lediglich schematisch ein Antrieb 21 dargestellt, der den Drehtisch antreibt, derart, dass sich der Drehtisch 11 um die Drehachse D dreht.

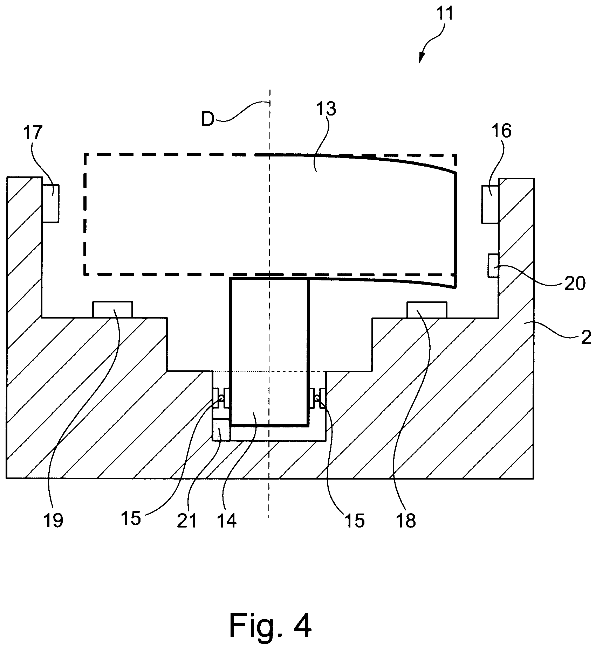

Gemäß Fig. 4 ist die Drehvorrichtung 11 mit der Drehtischplatte 13 und dem Drehtischfuß 14 dargestellt. Die Drehtischplatte 13 ist in der Idealposition gestrichelt dargestellt. Mit durchgezogener Linie ist eine Verbiegung der Drehtischplatte 13 auf der rechten Seite dargestellt. Diese Verbiegung kann beispielsweise durch ein schweres Werkstück (nicht dargestellt) verursacht werden.

In Fig. 4 dargestellte Teile, die auch in Fig. 2 dargestellt sind, sind mit gleichen Bezugszahlen versehen und werden nicht noch einmal beschrieben. Durch die Verbiegung der Drehtischplatte 13 verändert sich der Abstand zwischen der Drehtischplatte 13 und dem Abstandssensor 18. Der Abstand zwischen der Drehtischplatte 13 und dem in axialer Richtung bezogen auf die Drehachse D der Drehvorrichtung 11 den Abstand erfassenden Sensor 18 verringert sich. Dies wird von dem Abstandssensor 18 erfasst.

Dreht sich die Drehtischplatte 13 um 180°, so erfasst der Abstandssensor 19 eine entsprechende Verringerung des Abstandes zwischen der Drehtischplatte 13 und dem Abstandssensor 19 in axialer Richtung bezogen auf die Drehachse D.

Mit diesen Messwerten lässt sich eine Korrektur der Koordinatenmesswerte des Werkstückes online durchführen.

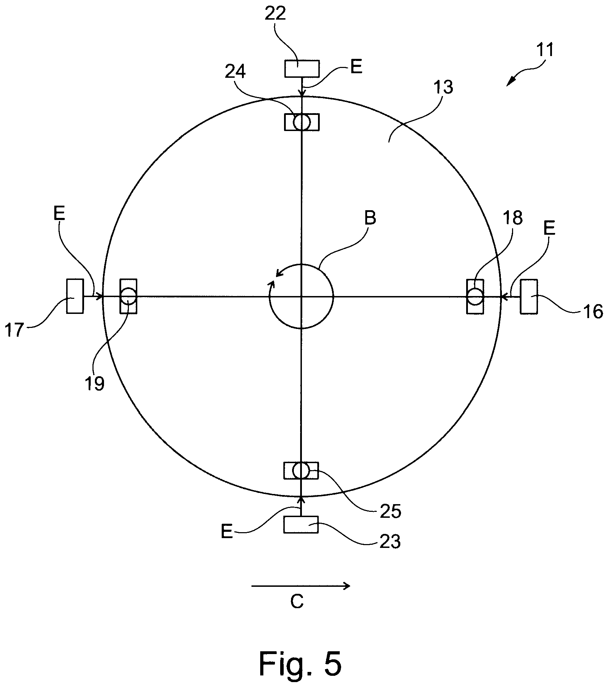

Fig. 5 zeigt die Drehtischplatte 13. Das Koordinatenmessgerät mit dem Grundbett 2 ist in Fig. 5 nicht dargestellt. Die Sensoren 16, 17, 18, 19 wie auch die weiteren Sensoren 22, 23, 24, 25 sind an dem in Fig. 5 nicht dargestellten Grundbett 2 angeordnet oder an einem stationären Teil der Drehvorrichtung 11 mit der Drehtischplatte 13.

Die Abstandssensoren 16, 17, 22, 23 sind als in radialer Richtung bezogen auf die Drehachse D der Drehvorrichtung 11 den Abstand erfassende Abstandssensoren ausgebildet. Die Abstandssensoren 18, 19, 24, 25 sind als bezogen auf die Drehachse D der Drehvorrichtung 11 in axialer Richtung den Abstand erfassende Abstandssensoren ausgebildet.

Die Abstandssensoren 22, 16, 23, 17 sind jeweils im 90°-Winkel zueinander versetzt angeordnet. Der Drehtisch dreht sich in Richtung des Doppelpfeiles B. Geht man davon aus, dass der Abstandssensor 22 bei 0° angeordnet ist, so ist der Abstandssensor 16 bei 90°, der Abstandssensor 23 bei 180° und der Abstandssensor 17 bei 270° angeordnet.

Die Abstandssensoren 18, 19, 24, 25 sind auch jeweils im 90°-Winkel bezogen auf die Drehrichtung der Drehtischplatte B angeordnet. Der Abstandssensor 24 ist bei 0° angeordnet, der Abstandssensor bei 90°, der Abstandssensor 25 bei 180° und der Abstandssensor 19 bei 270°.

Die Abstandssensoren 22, 24; 16, 18; 23, 25; 17, 19; bilden Sensorpaare, wobei jeweils ein Sensor in radialer Richtung und ein Sensor in axialer Richtung bezogen auf die Drehachse D den Abstand zu der Drehtischplatte 13 erfasst.

Grundsätzlich besteht auch die Möglichkeit, anzahlmäßig weniger oder mehr Sensoren anzuordnen.

Mit der in Fig. 5 dargestellten Ausführungsform lassen sich Taumel und translatorische Bewegungen der Drehvorrichtung 11 hinreichend erfassen.

Eine translatorische Bewegung ist beispielhaft mittels des Pfeiles C in Fig. 5 dargestellt. Die Drehtischplatte 13 wandert in Richtung des Pfeiles C. Hierdurch wird der Abstand zwischen der Drehtischplatte 13 und dem Abstandssensor 17 größer, während der Abstand zwischen der Drehtischplatte 13 und dem Abstandssensor 16 kleiner wird. Die Wirkrichtung der Abstandssensoren 16, 23; 17, 22 sind mit Pfeilen E dargestellt.

Durch die Erfassung der Abstandsänderungen durch die Sensoren 16, 17, 18, 19, 22, 23, 24, 25 werden Bewegungsabweichungen der Drehtischplatte 13 erfasst. Mit diesen Werten lässt sich eine Korrektur der Koordinatenmesswerte online durchführen.

### Bezugszahlen

- 1: Koordinatenmessgerät
- 2: Grundbett
- 3: Messtisch
- 4: Führung
- 5: Portal
- 6: Stützen
- 7: Traverse
- 8: Schlitten
- 9: Pinole
- 10: Tastkopf
- 11: Drehvorrichtung
- 12: Tastkugel
- 13: Drehtischplatte
- 14: Drehtischfuß
- 15: Kugellager
- 16: Abstandssensor
- 17: Abstandssensor
- 18: Abstandssensor
- 19: Abstandssensor
- 20: Drehwinkelmesseinrichtung
- 21: Antrieb
- 22: Abstandssensor
- 23: Abstandssensor
- 24: Abstandssensor
- 25: Abstandssensor
- A: Pfeil
- B: Doppelpfeil
- C: Pfeil
- D: Drehachse
- D': taumelnde Drehachse
- E: Pfeile
- α: Winkelabweichung der Drehachse D

## Patentansprüche

1. Anordnung zum Reduzieren von Fehlern einer Drehvorrichtung bei der Bestimmung von Koordinatenmesswerten eines Werkstückes, wobei die Anordnung ein Koordinatenmessgerät und die Drehvorrichtung aufweist, auf der ein Werkstück anordbar und um eine Drehachse der Drehvorrichtung drehbar ist, wobei die Drehvorrichtung mit einer Drehtischplatte ein erstes, zum Koordinatenmessgerät während einer Messung stationäres erstes Teil und ein relativ zu dem ersten Teil drehbares zweites Teil aufweist,
wobei wenigstens drei Abstandssensoren (16, 17, 18, 19, 22, 23, 24, 25) für die Erfassung eines Abstandes des drehbaren zweiten Teiles (13) zu den wenigstens drei Abstandssensoren (16, 17, 18, 19, 22, 23, 24, 25) an dem stationären ersten Teil angeordnet sind, und die Abstandssensoren (16, 17, 18, 19, 22, 23, 24, 25) als bezogen auf eine Drehachse (D) der Drehvorrichtung (11) in radialer Richtung den Abstand erfassende und/oder als bezogen auf die Drehachse (D) der Drehvorrichtung (11) in axialer Richtung den Abstand erfassende Abstandssensoren (16, 17, 18, 19, 22, 23, 24, 25) ausgebildet sind, **dadurch gekennzeichnet,**
**dass** die Abstandssensoren (16, 17, 18, 19, 22, 23, 24, 25) als einen Abstand zwischen den Abstandssensoren (16, 17, 18, 19, 22, 23, 24, 25) und der Drehtischplatte (13) bestimmende Abstandssensoren (16, 17, 18, 19, 22, 23, 24, 25) ausgebildet sind.

2. Anordnung nach Anspruch 1, **dadurch gekennzeichnet, dass** vier Abstandssensoren (16, 17, 22, 23) für die Erfassung des Abstandes des drehbaren zweiten Teiles (13) in radialer Richtung bezogen auf die Drehachse (D) der Drehvorrichtung (11) und/oder vier Abstandssensoren (18, 19, 24, 25) für die Erfassung des Abstandes des drehbaren zweiten Teiles (13) in axialer Richtung bezogen auf die Drehachse (D) der Drehvorrichtung (11) vorgesehen sind.

3. Anordnung nach Anspruch 1 oder 2, **dadurch gekennzeichnet, dass** die Abstandssensoren (16, 17, 22, 23; 18, 19, 24, 25) über den Umfang der Drehvorrichtung gleichmäßig verteilt angeordnet sind.

4. Anordnung nach Anspruch 2, **dadurch gekennzeichnet, dass** jeweils ein Abstandssensor (16, 17, 22, 23) für die Erfassung des Abstandes des drehbaren zweiten Teiles (13) in radialer Richtung bezogen auf die Drehachse (D) der Drehvorrichtung (11) und ein Abstandssensor (18, 19, 24, 25) für die Erfassung des Abstandes des drehbaren zweiten Teiles (13) in axialer Richtung bezogen auf die Drehachse (D) der Drehvorrichtung (11) über den Umfang der Drehvorrichtung (11) gesehen an den gleichen Winkelpositionen an dem ersten stationären Teil (2) der Drehvorrichtung (11) angeordnet sind.

5. Anordnung nach einem der vorhergehenden Ansprüche, **dadurch gekennzeichnet, dass** jeweils zwei Abstandssensoren (16, 17; 22, 23) für die Erfassung des Abstandes des drehbaren zweiten Teiles (13) in radialer Richtung bezogen auf die Drehachse (D) der Drehvorrichtung (11) über den Umfang der Drehvorrichtung (11) um 180° versetzt zueinander angeordnet sind.

6. Anordnung nach einem der vorhergehenden Ansprüche, **dadurch gekennzeichnet, dass** als Abstandssensoren (16, 17, 18, 19, 22, 23, 24, 25) induktive Sensoren, kapazitive Sensoren, piezoelektrische Sensoren, Wirbelstromsensoren, Magnetfeldsensoren, optische Sensoren und/oder mechanische Induktivtaster verwendet werden.

7. Anordnung nach einem der vorhergehenden Ansprüche, **dadurch gekennzeichnet, dass** das erste stationäre Teil (2) der Drehvorrichtung (11) Teil des Koordinatenmessgerätes (1) ist.

8. Anordnung nach einem der Ansprüche 1 bis 6, **dadurch gekennzeichnet, dass** das Koordinatenmessgerät (1) als Koordinatenmessgerät (1) mit einem Werkzeugtisch (3) ausgebildet ist, und dass auf dem Werkzeugtisch (3) die Drehvorrichtung (11) angeordnet ist.

## Claims

1. Arrangement for reducing errors of a rotary device when determining coordinate measurement values of a workpiece, wherein the arrangement has a coordinate measurement apparatus and the rotary device on which a workpiece can be arranged and can be rotated about a rotation axis of the rotary device, wherein the rotary device with a rotary table plate has a first part which is stationary with respect to the coordinate measurement apparatus during a measurement and a second part which is rotatable relative to the first part, wherein at least three distance sensors (16, 17, 18, 19, 22, 23, 24, 25) are arranged on the stationary first part for detecting a distance of the rotatable second part (13) from the at least three distance sensors (16, 17, 18, 19, 22, 23, 24, 25), and the distance sensors (16, 17, 18, 19, 22, 23, 24, 25) are designed as distance sensors (16, 17, 18, 19, 22, 23, 24, 25) detecting the distance in relation to a rotation axis (D) of the rotary device (11) in the radial direction and/or as distance sensors (16, 17, 18, 19, 22, 23, 24, 25) detecting the distance in relation to a rotation axis (D) of the rotary device (11) in the axial direction, **characterized in that** the distance sensors (16, 17, 18, 19, 22, 23, 24, 25) are designed as distance sensors (16, 17, 18, 19, 22, 23, 24, 25) determining a distance between the distance sensors (16, 17, 18, 19, 22, 23, 24, 25) and the rotary table plate (13).

2. Arrangement according to Claim 1, **characterized in that** four distance sensors (16, 17, 22, 23) are provided for detecting the distance of the rotatable second part (13) in the radial direction in relation to the rotation axis (D) of the rotary device (11) and/or four distance sensors (18, 19, 24, 25) are provided for detecting the distance of the rotatable second part (13) in the axial direction in relation to the rotation axis (D) of the rotary device (11).

3. Arrangement according to Claim 1 or 2, **characterized in that** the distance sensors (16, 17, 22, 23; 18, 19, 24, 25) are arranged in a manner uniformly distributed over the circumference of the rotary device.

4. Arrangement according to Claim 2, **characterized in that** in each case one distance sensor (16, 17, 22, 23) for detecting the distance of the rotatable second part (13) in the radial direction in relation to the rotation axis (D) of the rotary device (11) and one distance sensor (18, 19, 24, 25) for detecting the distance of the rotatable second part (13) in the axial direction in relation to the rotation axis (D) of the rotary device (11) are arranged at the same angular positions on the first stationary part (2) of the rotary device (11) as seen over the circumference of the rotary device (11).

5. Arrangement according to any of the preceding claims, **characterized in that** in each case two distance sensors (16, 17; 22, 23) for detecting the distance of the rotatable second part (13) in the radial direction in relation to the rotation axis (D) of the rotary device (11) are arranged offset through in 180° with respect to each other over the circumference of the rotary device (11) .

6. Arrangement according to any of the preceding claims, **characterized in that** the distance sensors (16, 17, 18, 19, 22, 23, 24, 25) used are inductive sensors, capacitive sensors, piezoelectric sensors, eddy current sensors, magnetic field sensors, optical sensors and/or mechanical inductive sensing units.

7. Arrangement according to any of the preceding claims, **characterized in that** the first stationary part (2) of the rotary device (11) is part of the coordinate measurement apparatus (1).

8. Arrangement according to any of Claims 1 to 6, **characterized in that** the coordinate measurement apparatus (1) is designed as a coordinate measurement apparatus (1) with a tool table (3), and **in that** the rotary device (11) is arranged on the tool table (3).

## Revendications

1. Ensemble destiné à réduire des erreurs d'un dispositif de rotation lors de la détermination de valeurs de mesure de coordonnées d'une pièce, l'ensemble comportant un appareil de mesure de coordonnées et le dispositif de rotation sur lesquels une pièce peut être disposée et mise en rotation sur un axe de rotation du dispositif de rotation, le dispositif de rotation pourvu d'un plateau tournant comportant une première partie qui est fixe par rapport à l'appareil de mesure de cordonnées pendant une mesure et une deuxième partie qui peut tourner par rapport à la première partie,
au moins trois capteurs de distance (16, 17, 18, 19, 22, 23, 24, 25) destinés à détecter la distance entre la deuxième partie rotative (13) et les au moins trois capteurs de distance (16, 17, 18, 19, 22, 23, 24, 25) étant disposés sur la première partie fixe, et les capteurs de distance (16, 17, 18, 19, 22, 23, 24, 25) étant conçus comme des capteurs de distance (16, 17, 18, 19, 22, 23, 24, 25) qui détectent la distance par rapport à l'axe de rotation (D) du dispositif de rotation (11) dans la direction radiale et/ou qui détectent la distance par rapport à l'axe de rotation (D) du dispositif de rotation (11) dans la direction axiale,
**caractérisé en ce que** les capteurs de distance (16, 17, 18, 19, 22, 23, 24, 25) sont conçus comme des capteurs de distance (16, 17, 18, 19, 22, 23, 24, 25) qui déterminent la distance entre les capteurs de distance (16, 17, 18, 19, 22, 23, 24, 25) et le plateau tournant (13) .

2. Ensemble selon la revendication 1, **caractérisé en ce que** quatre capteurs de distance (16, 17, 22, 23) sont prévus pour détecter la distance de la deuxième partie rotative (13) dans la direction radiale par rapport à l'axe de rotation (D) du dispositif de rotation (11) et/ou quatre capteurs de distance (18, 19, 24, 25) sont prévus pour détecter la distance de la deuxième partie rotative (13) dans la direction axiale par rapport à l'axe de rotation (D) du dispositif de rotation (11).

3. Ensemble selon la revendication 1 ou 2, **caractérisé en ce que** les capteurs de distance (16, 17, 22, 23 ; 18, 19, 24, 25) sont disposés de manière uniformément répartie sur la circonférence du dispositif de rotation.

4. Ensemble selon la revendication 2, **caractérisé en ce qu'**un capteur de distance (16, 17, 22, 23) destiné à détecter la distance de la deuxième partie rotative (13) dans la direction radiale par rapport à l'axe de rotation (D) du dispositif de rotation (11) et un capteur de distance (18, 19, 24, 25) destiné à détecter la distance de la deuxième partie rotative (13) dans la direction axiale par rapport à l'axe de rotation (D) du dispositif de rotation (11), sont disposés, en vue de dessus de la circonférence du dispositif de rotation (11), aux mêmes positions angulaires sur la première partie fixe (2) du dispositif de rotation (11).

5. Ensemble selon l'une des revendications précédentes, **caractérisé en ce que** deux capteurs de distance (16, 17 ; 22, 23) destinés à détecter la distance de la deuxième partie rotative (13) dans la direction radiale par rapport à l'axe de rotation (D) du dispositif de rotation (11) sont disposés de manière décalée de 180° l'un par rapport à l'autre sur la circonférence du dispositif de rotation (11).

6. Ensemble selon l'une des revendications précédentes, **caractérisé en ce que** des capteurs inductifs, des capteurs capacitifs, des capteurs piézoélectriques, des capteurs à courants de Foucault, des capteurs de champ magnétique, des capteurs optiques et/ou des boutons inductifs mécaniques peuvent être utilisés comme capteurs de distance (16, 17, 18, 19, 22, 23, 24, 25).

7. Ensemble selon l'une des revendications précédentes, **caractérisé en ce que** la première partie fixe (2) du dispositif de rotation (11) fait partie de l'appareil de mesure de coordonnées (1).

8. Ensemble selon l'une des revendications 1 à 6, **caractérisé en ce que** l'appareil de mesure de coordonnées (1) est conçu comme un appareil de mesure de coordonnées (1) pourvu d'une table à outils (3), et **en ce que** le dispositif de rotation (11) est disposé sur la table à outils (3).
